Europäisches Patentamt

**European Patent Office**

Office européen des brevets

(19)

(11) Publication number: **0 185 003**
**A1**

(12) **EUROPEAN PATENT APPLICATION**

(21) Application number: **85850394.9**

(22) Date of filing: **09.12.85**

(51) Int. Cl.⁴: **B 27 N 9/00**

(30) Priority: **12.12.84 SE 8406327**
**12.12.84 SE 8406329**

(43) Date of publication of application: **18.06.86**
**Bulletin 86/25**

(84) Designated Contracting States: **AT BE CH DE FR GB IT LI LU NL SE**

(71) Applicant: **Boliden Aktiebolag, Box 5508, S-114 85 Stockholm (SE)**

(72) Inventor: **Ranhagen, Ernst Gustaf Rane, Meteorvägen 60, S-183 33 Täby (SE)**
Inventor: **Ribbing, Claes Magnus Sigwidsson, Lyckovägen 10, S-161 36 Bromma (SE)**

(74) Representative: **Inger, Lars Ulf Bosson et al, Boliden AB Patent & Trade Marks Box 5508, S-114 85 Stockholm (SE)**

(54) **A method of manufacturing fibreboard, and fibreboard manufactured in accordance with the method.**

(57) The present invention relates to a method of manufacturing fibreboard, such as plywood, chipboard and other fibreboard of improved properties with regard to fire-resistance, and also to board manufactured in accordance with the method. In accordance with the method, biotite, phlogopite and/or muscovite is, or are, added to the wood-fibre material and/or the glue used to bind the wood-fibres together, in a quantity not less than 20% by weight, the glue comprising phenolic-resin glue and/or isocyanate glue, and/or epoxy glue optionally together with additions of silicon glue, or a silicon glue optionally together with additions of phosphoric acid.

EP 0 185 003 A1

ACTORUM AG

## A METHOD OF MANUFACTURING FIBREBOARD, AND FIBREBOARD MANUFACTURED IN ACCORDANCE WITH THE METHOD

### DESCRIPTION

### Technical Field

The present invention relates to a method of manufacturing fibreboard having fire-resistant properties, and also to fibreboard manufactured in accordance with the method.

It is an object of the present invention to produce a fibreboard which has fire-resistant properties.

### Background Art

The manufacture of board from wood in the form of veneers, sawdust or like wood particles, or from fibre in the form of wood fibre, straw, sugar cane (bagasse), is a worldwide industry. Unless otherwise stated, or unless otherwise apparent, all such board is referred to hereinafter generally as fibreboard. It will be understood that many different grades of fibreboard are available, these grades being contingent on the purpose for which the board is intended.

Plywood (crossed-veneers) is a board which comprises a plurality of veneers glued together, normally so that the grain of one veneer is at right angles to the grain of its neighbour. Coreboard is also considered to fall in this category, and can be said to be plywood with a centre layer of wood strips.

Of the three principal categories of board, plywood is the oldest and is produced in the largest quantities when seen internationally. Veneers were produced and glued together in the time of ancient Egypt. Production on an industrial scale began in Europe roughly one hundred years ago, and was effected mainly to produce a cheap packaging material, and later on also to provide a qualified plywood for the manufacture of aircraft. The advent of the modern resin glues enabled plywood to be mass produced at competitive prices within industries and fields as wide apart as cabinet making, the manufacture of concrete moulds, the production of facing boards and plywood load-carrying structures.

The board can be subsequently refined or finished in workshops, where it may be finely polished, brushed with wire brushes, profiled, varnished and foliated.

Chipboard is produced by compressing sawdust or some other lignified wood material, together with a glue addition. The glue is normally so-called urea glue (carbamide glue) hardened with formaldehyde. Fibreboard produced with the aid of other binders, for example cement, are also available.

Chipboard was developed in Germany during the 1940's, in accordance with a Czeckoslovakian invention. Production has increased extremely rapidly and has been adapted technically to local supplies of raw materials and to the demand for such board. The original intention of using fibreboard for furniture and for carpentry has been complemented by the use of fibreboard as an actual building material, and at present also in weather-exposed and load-carrying structures. In conjunction herewith, there have been used glues and adhesives other than the conventional urea glues.

The workchop finishing of such fibreboard may include, for example, applying coats of primer thereto, varnishing or foliating the board, or providing the same with tongues and grooves, and cutting the board into sizes according to order.

Fibreboard is manufactured from lignocellulosic fibres, the mutual binding or felting of which is primarily dependent on the intrinsic adhesion properties of the fibres. Binders and admixtures of other materials may also be included, however, (similar to the case of paper). The board is produced in thicknesses from 2 mm.

Fibreboard was invented in the USA, where porous board was manufactured from crushed sugar cane (bagasse) 1912 and hard-pressed sheets of defibred wood in accordance with the Mason method of 1926. The first porous boards made from straw were manufactured in Harg, near Nyköping in Sweden, in 1927. The manufacture of hardboard commenced in 1929, under the name Masonite. Porous fibreboard arrived in 1928, under the designation Treetex. These first tradenames have become synonomous terms for hardboard and porous board respectively.

Within the group are also to be found such products as fibreboard that has been impregnated with hardening oil or asphalt, in order to increase its resistance to moisture and putrifaction. The finishing processes to which such board is subjected may include, for example, cutting the board to size on an industrial scale, tongue and grooving the board, applying varnish coatings thereto, patterning the board, and perforating the same.

Hybrid board comprising a mixture of the fundamental board-types Plywood, Chipboard and Fibreboard is also available. Each type of board has its own particular advantages and disadvantages, and hence attempts have been made to develop board whose properties lie somewhere between the properties of the three major types of board, for example plywood faced with veneer has been replaced with fine-surface thin fibreboard. The desire for a fibreboard having a finer surface finish resulted in a board coated with a layer of finely--ground fibre, so-called smooth-surface board. For some applications, chipboard was faced with veneer to provide a decorative surface combined with a higher bending resistance.

MDF-board (Medium Density Fibreboard) has been available for a number of years as an alternative to chipboard. MDF is a fibreboard manufactured by dry processes, and the fibres are consequently bonded together with the aid of an adhesive, instead of the natural felting of the fibres obtained with an initially wet sheet. Because MDF can be made very hard and has good machining or working properties, such as to leave clean cut surfaces of high-surface compactness when sawn, planed or milled, it is extremely suitable for use in the manufacture of furniture and for cabinet making.

The designation "Fibrewood" is not only used for MDF-board, but is also used for conventional board that has subsequently been dry-pressed to produce a patterned embossment and has been fixated with separate binder additions during the compression stage.

Fibreboard can also be placed into groups in accordance with its mechanical strength and hardness. In this respect hard fibreboard constitutes a conventional starting material for many different purposes. Listed below are a number of examples of refined board, with an example of the use to which the board is put being shown in parenthesis.

- Painted in different colours and patterns (interior fittings)
- Oil-hardened for use in moist environments (agricultural use)
- Reinforced (floor support structures)
- Perforated (pegboards, telephone boxes)
- Surface sealed for low paint consumption (interior furnishings, fittings etc)
- Surface polished (veneers, laminates)
- Thickness equalized (machined back-surface for exact thickness)
- Embossed patterning (caravans)
- Joint milled (sub-floors)
- Compression moulded (components for vehicle fittings)
- Plastics laminated, or plastic or metal coated (lining and facing purposes)
- Faced with various surface layers (ready-for-use floor slabs)
- Faced with cardboard or foil (foldable cartons, boxes etc)

Medium-hard fibreboard is primarily used for facing or panelling walls, ceilings, and in double-floor structures, false-ceiling structures, inserted-floor structures etc, and presents a surface suitable for paint finishes, wall paper and other surface coverings. This board can be safely nailed and screwed to underlying support surfaces. A more popular name for medium-hard fibreboard is building board. Because of its high mechanical strength, building board affords an important contribution to the stiffening of studwork etc. The toughness of the board enables it to be carried and flexed without cracking. It can be milled, sawn, nailed and screwed just as readily as wood. Various types of refined or machined building boards are available, for example

- boards with rebated long sides to facilitate the positioning of such boards on underlying support surfaces and also to facilitate the work of joining the boards together;
- varnished boards;

- tongue-and-grooved board, intended for wall and floor panelling with hidden nailing;
- boards with embossed patterns;
- facing boards, with or without wooden panelling nailed thereto.

Another fibreboard is the aforementionied MDF-board. MDF is a highly homogenous material, which enables it to be worked extremely well, for example edge-profiled. Nails and screws also obtain a very firm grip in this kind of board. The material is widely used in, for example, the furniture and carpentry industry for manufacturing cupboard doors, table-tops, doors, toys etc.

Porous fibreboard is a lightweight material which exhibits good heat and sound insulating properties. Consequently, the board is used, inter alia, as a door filling and in floor structures to dampen sound when walking thereon. Its use as a covering material in ceiling structures affords improved acoustics, due to the sound absorbing properties of the board. Porous fibreboard is also used in many other fields, for example, as packaging material, notice boards and in sandwich structures.

Fibreboard impregnated with asphalt, so-called asphalt board, is primarily used in external walls as a wind-shield and wind-stabilizing medium, although it can also be used as blind-floor material.

In addition to the aforementioned board, there is also available a board which is impregnated with phenolic resin and used as a wind-shield in external wall structures, this board being termed "green wind-board".

The following standard values in respect of material data are examples of the material properties required by Standards of the various types of board available.

| Type of board | Density | Bending strength | Tensile strength | Tensile strength perpendicular to the plane of the board | Thermal conductivity | Vapour resistance |
|---|---|---|---|---|---|---|
| | kg/m$^3$ | MPa | MPa | MPa | W/m°C | s/m |
| Hard | 800-1050 | 30-60 | 20-40 | 0.7-1.5 | 0.10 | 10-40x10$^3$ |
| Hard, oil-hardened | ca 1000 | 40-70 | 20-40 | 1-2 | 0.12 | 18-75x10$^3$ |
| Medium hard (building board) | 600-800 | 15-30 | 10-15 | 0.3-0.7 | 0.08 | 8-15x10$^3$ |
| Porous | 230-270 | 2-2.5 | – | – | 0.05 | – |
| Asphalt-board | ca 350 | 2.3-2.6 | – | – | 0.065 | 5x10$^3$ |
| MDF | ca 750 | 30 | – | 0.8 | – | – |

## Disclosure of the invention

It has now surprisingly been found that these standards can be met by means of the present invention, which is characterized by adding to phenolic-resin glue and/or isocyanate glue and/or epoxy glue and/or a silicon glue and wood-fibre material in the manufacture of fibreboard an effective quantity of biotite, phlogopite and/or muscovite, in amounts not less than about 20% by weight calculated on the weight of the end product.

Further characteristic features of the invention are set forth in the following claims.

The present invention will now be described in more detail with reference to the following example.

## Example 1

In this test there were used biotite and muscovite qualities taken in Aitik, Lappland, Sweden. The qualities had a particle size beneath 400 /um; on average a particle size of between 100-200 /um. The glue qualities in the tests were phenolic resin glue designated Kauresin 250, manufactured by BASF in the Federal Republic of Germany. Paraformaldehyde was used to harden the phenolic resin glue.

Boards of 600x600 mm and a thickness of 20 mm were manufactured in the tests carried out. The boards were of the single-layer type and the wood particles used were from spruce. The green density was 700 kg/m$^3$. The glue was applied through sprays, in quantities corresponding to 12% solid resin calculated on wood particles and mineral. The hardener constituted 10% of the solid resin.

In the case of phenolic-resin glue, the press temperature was 200°C and the press time 8 minutes.

Mica material having a particle size $\ll 0.4$ mm was admixed with the wood particles prior to adding glue. 0%, 20%, and 40% of the wood particles in a respective one of three sample batches was replaced with mica material. Three boards were produced from each batch.

Subsequent to manufacture, the boards were stored for five weeks in a normal climate (20°C, 65% relative humidity) before being tested.

The various aspects of the tests were carried out in accordance with DIN-requirements. The various DIN-requirements observed are found in DIN 4102, part 1, may 1981 "Fire testing of building materials and building components; combustible building materials class B"; DIN 52361, "Determination of measurement deviations, green density and moisture content; DIN 52362, part 1, "Bending tests, Determination of bending strength"; DIN 52365 "Determination of tensile strength perpendicular to the plane of the board". The green density profile was measured in accordance with Ranta & May, Holz Roh-Werkstoff 36, pages 467-474, 1978. The test pieces used to measure the green density profile had a size of 50x50x20 mm.

A solid wax, hydrophobizing agent (Mobilcer 736), known in the present context, was added to all test pieces in an amount of 1% calculated on the weight of ingoing wood particles.

The following results were obtained. Table 1 shows the composition of the materials used and the conditions employed in the manufacture of fibreboard. Table 2 tabulates physical data in the manufacture of the board.

**Table 1**

| Sample | Addition % of wood weight (DS) | Glue type and quantity % of wood (DS) | Hardener % of glue | Hydro-phobi-zing agent % of wood | Glue moisture % | Press time minutes |
|---|---|---|---|---|---|---|
| 1 | – | Phenol 12 | 10 | 1 | 16 | 8 |
| 2 | 20% Biotite | Phenol 12 | 10 | 1 | 16 | 8 |
| 3 | 40% Biotite | Phenol 12 | 10 | 1 | 16 | 8 |
| 4 | 20% Muscovite | Phenol 12 | 10 | 1 | 16 | 8 |
| 5 | 40% Muscovite | Phenol 12 | 10 | 1 | 16 | 8 |

DS = Dry solids content

**Table 2**

| Sample | Green density mean value $g/cm^3$ | Flexural strength $N/mm^2$ | Tensile strength perpendicular to the plane of board $N/mm^2$ V 20 | V 100 | Equalizing moisture content % |
|---|---|---|---|---|---|
| 1 | 0.702 | 21.8 | 1.13 | 0.49 | 9.1 |
| 2 | 0.690 | 12.6 | 0.68 | 0.22 | 8.1 |
| 3 | 0.678 | 6.6 | 0.43 | 0.13 | 7.0 |
| 4 | 0.694 | 13.3 | 0.67 | 0.17 | 8.2 |
| 5 | 0.677 | 6.6 | 0.36 | 0.10 | 7.0 |
| Mean values for 20 mm boards according to DIN 68763 | | | | | |
| V 20 | | 16 | 0.25 | | $9 \pm 4$ |
| V 100 | | 18 | | 0.15 | |

**Table 3**

| Sample | Max. flame height | Average length for test pieces | Max. average fluegas temp. | After-burning subsequent to terminating firing | Smoldering subsequent to removing fire | Did the sample endure the test in the fire shaft |
|---|---|---|---|---|---|---|
| | cm | cm | °C | sec | sec | |
| 1 | >100 | – | 154.0 | – | – | No |
| 2 | 100 | 18.5 | 116.0 | – | 50 | Yes |
| 3 | 70 | 40.5 | 100.2 | – | 45 | Yes |
| 4 | 80 | 33 | 106.8 | – | 45 | Yes |
| 5 | 70 | 3 | 103.8 | 30 | 30 | Yes |

**Example 2**

In this test there were used biotite and muscovite qualities taken in Aitik, Lappland, Sweden. The qualities had a particle size beneath 400 $\mu$m; on average a particle size of between 100-200 $\mu$m (about 80%). The glue qualities in the tests were silicate-resin glue qualities in the form of waterglass ($SiO_2:Na_2O \approx 3.3:1$).

Boards of 600x600 mm and a thickness of 20 mm were manufactured in the tests carried out. The boards were of the single-layer type and the wood particles used were from spruce. The green density was 700 kg/m$^3$. The glue was applied through sprays, in quantities corresponding to 10% solid resin calculated on wood particles and mineral.

The press temperature was 180°C and the press time 8 minutes.

Mica material having a particle size << 0.4 mm was admixed with the wood particles prior to adding glue. 0%, 20%, and 40% of the wood particles in a respective one of three sample batches was replaced with mica material. Three boards were produced from each batch.

The boards prepared were stored in accordance with the boards of Example 1 above.

The hydrophobizing agent (Mobilcer 736) was added to all test pieces in an amount of 1%.

The following results were obtained. Table 4 shows the composition of the materials used and the conditions employed in the manufacture of fibreboard.

**Table 4**

| Sample | Addition % of wood weight (DS) | Glue type and quantity % of wood (DS) |
|---|---|---|
| 11 | – | Silicate 10 |
| 12 | 20% Biotite | Silicate 10 |
| 13 | 40% Biotite | Silicate 10 |
| 14 | 20% Muscovite | Silicate 10 |
| 15 | 40% Muscovite | Silicate 10 |

DS = Dry solids content

**Table 5**

| Sample | Max. flame height | Average length for test pieces | Max. average fluegas temp. | After-burning subsequent to terminating firing | Smoldering subsequent to removing fire | Did the sample endure the test in the fire shaft |
|---|---|---|---|---|---|---|
| | cm | cm | °C | sec | sec | |
| 11 | >100 | – | 155.0 | – | – | No |
| 12 | 95 | 20.5 | 110.0 | – | 40 | Yes |
| 13 | 70 | 40.0 | 102.0 | – | 30 | Yes |
| 14 | 85 | 23 | 105.1 | – | 45 | Yes |
| 15 | 65 | 39 | 100.2 | – | 25 | Yes |

Phosphoric acid can be added to the composition in an amount of 5-20% calculated on the weight of the waterglass present, for the purpose of hardening the waterglass. The phosphoric acid can be admixed directly with the mica material and the glue, prior to adding the wood particles.

Other silicate glues than waterglass can also be used. For example, known organic siliconate glue, such as alkyl siliconates can also be used to advantage.

The waterglass used is normally one having an $Na_2O:SiO_2$-ratio of 1:2 to 1:4. The alkalinity should not be excessively high, since otherwise there is a danger of the woodfibres becoming discoloured. Alkalinity is drastically reduced, however, when the phosphoric acid is added. Water-soluble components of the waterglass can be prevented from dissolving in excessive quantities in the water present, by adding a calcium salt, or some other metal salt, such as a salt of copper, magnesium, zinc, or by silicate precipitation with $CO_2$-gas.

The silicate glue may also be combined with resin glues known and used in the fibreboard industry, such as phenolic-resin glue, epoxy-resin glue, and isocyanate-resin glue.

Attempts were made to maintain the green density at a relatively constant level during the aforesaid tests, the sample containing mica material consequently obtaining lower mechanical strength properties. These latter boards contained more air than the comparison boards, since mica has a higher density than wood chips (3-4:1). The mechanical strength properties of the board can, of course, be improved by, for example, increasing the press pressure in order to increase the green density, or to optimize the components of the starting material.

Fibreboard containing mica additions can either be manufactured in accordance with a wet or in accordance with a dry method. The mica material can also suitably be ground together with the wood particle material, in order to provide fresh unadulterated surfaces. Mica should be ground in a wet environment, and consequently can also be ground in the glue phase. Measures should be taken, however, to ensure that the mica surfaces do not age, so as to maintain the surfaces fresh.

In the aforegoing, the mica material was said to have a particle size of <<0.4 mm. This does not prevent other qualities from being used, however. Thus, it is possible to use large-flake mica qualities having a geometric extension of 2x3 mm or thereabove, for example 4x7 mm. The thickness of the material, however, should seldom exceed 0.1 mm.

In the manufacture of fibreboard, the mica material, biotite phlogopite and/or muscovite, can be supplied directly to the wood-fibre material prior to introducing glue thereto, or can be added to the glue, or added in the form of a glue-mica preparation. When the mica material is added directly to the glue, the mica may separate as a result of the difference in densities, although this can be effectively prevented by adding viscosity increasing products, such as cellulose derivatives.

The fibreboard can be produced in accordance with any known method, for example by mixing or spraying the wood fibre and wood-fibre-mica mixture respectively with a glue, to form flat wood blanks, which are then pressed under heat.

It will also be understood that the glue and wood-fibre material can be admixed with so-called fire salt, i.e. a salt which increases the fire resistance of the board. This salt may comprise ammonium phosphate which is dried into the wood fibre from an aqueous solution and released in the event of fire.

Fibreboards according to the aforegoing fulfil German Fire Class B in accordance with the aforesaid DIN-standards. In order to fulfil Swedish Ignition Class 1, it is necessary to undertake a certain modification, in which the mica material is preferably added in slightly larger quantities, 10-20% by weight, additionally.

The fire-resistant boards may be given a laminate structure comprising, for example, five layers, namely two outer mica layers, two heat-insulating layers, and a central layer for imparting mechanical strength to the board and enabling nails and screws to be secured therein.

Additional flame protection is obtained when the fibreboard prepared from phenolic resin glue, isocyanate glue or epoxy resin glue is treated with an inorganic or organic silicon compound. For example, waterglass ($Na_2O \cdot 3.3\ SiO_2$) can be applied to the fibreboard produced in accordance with the aforegoing, and hardened by adding 10-25% phosphoric acid. Hardening is effected relatively quickly (3-5 min) when re-pressing the board at 170°C. This phosphoric acid addition drastically reduced the alkalinity and was not seen to influence the wood-fibre material. The extent to which sodium salt is leached from the silicate can be controlled by either a calcium addition, carbon-dioxide precipitation, or an after-treatment using a metal salt, such as zinc, copper, magnesium. The organic silicon compounds used may be alkylsiliconates.

## CLAIMS

1. A method of manufacturing fibreboard possessing fire-resistant properties with the use of wood-fibre based material and a glue which binds said material, characterized by adding to the wood-fibre material and glue, which is selected from the group consisting of phenolic resin glue, isocyanate glue, epoxy glue and silicon glue, biotite, phlogopite and/or muscovite in an amount not less than about 20% by weight of the weight of the end product, excluding the glue, to attain German Fire Class B.

2. A method according to claim 1, characterized in that the biotite, phlogopite and/or muscovite are carriers of the glue.

3. A method according to claim 1, characterized by adding biotite, phlogopite and/or muscovite to finely divided wood-fibre material for manufacturing so-called chipboard and fibreboard.

4. A method according to claims 1-3, characterized by adding biotite, phlogopite, and/or muscovite in a quantity of at least 30% by weight calculated on the weight of the end product.

5. A method according to claim 4, characterized in that the biotite, phlogopite and/or muscovite constitutes at least 40% of the end product.

6. A method according to claim 2, characterized in that the glue comprises up to 50% of the amount of biotite, phlogopite, and/or muscovite added.

7. A method according to claims 1-5, characterized by applying biotite, phlogopite and/or muscovite on both sides of a core of wood-fibre material.

8. A method according to claims 1-7, characterized in that the biotite, phlogopite and/or muscovite has a particle size smaller than 0.2 mm.

9. A method according to claims 1-8, characterized by adding an organic and/or inorganic silicon compound to the product, when the glue component is not a silicon glue.

15   0185003

10. A method according to claims 1-9, characterized in that the silicon compound used is waterglass, and that said waterglass is preferably hardened by adding phosphoric acid.

11. A fibreboard having fire-resistant properties produced in accordance with the method according to claims 1-10, characterized in that said board contains biotite, phlogopite, and/or muscovite in a quantity not less than 20% by weight, calculated on the weight of the end product excluding glue, and in that the glue is phenolic-resin glue and/or isocyanate glue and/or epoxy glue, and/or silicon glue.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | SU-A- 373 172 (S.J. KHVOSTENKOV)<br><br>- - - | 1,3-6,8,11 | B 27 N 9/00 |
| Y | US-A-4 480 060 (CORNING GLASSWORKS)<br>*. Claims 1, 5, 7; column 2, lines 24-39; column 2, line 65- column 3, line 47; examples 1-13*<br><br>- - - | 1,2,9,11 | |
| Y | GB-A-1 603 625 (CAPE BOARDS & PANELS LIMITED)<br>*Claims 1, 7, 8; page 1, lines 17-26*<br><br>- - - - - | 1,11 | |

| | |
|---|---|
| | TECHNICAL FIELDS SEARCHED (Int. Cl.4) |
| | B 29 J |

The present search report has been drawn up for all claims

| Place of search | Date of completion of the search | Examiner |
|---|---|---|
| STOCKHOLM | 11-03-1986 | JENSEN O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82